(19) Europäisches Patentamt
European Patent Office
Office européen des brevets

(11) **EP 4 769 701 A1**

(12) **EUROPEAN PATENT APPLICATION**
published in accordance with Art. 153(4) EPC

(43) Date of publication:
**01.07.2026 Bulletin 2026/27**

(21) Application number: **25863979.8**

(22) Date of filing: **02.09.2025**

(51) International Patent Classification (IPC):
**H01M 50/184** (2021.01)   **H01M 50/186** (2021.01)
**H01M 50/147** (2021.01)   **H01M 50/30** (2021.01)

(52) Cooperative Patent Classification (CPC):
**H01M 50/147; H01M 50/184; H01M 50/186;
H01M 50/30;** Y02E 60/10

(86) International application number:
**PCT/KR2025/013490**

(87) International publication number:
**WO 2026/054477 (12.03.2026 Gazette 2026/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.09.2024 KR 20240120403**

(71) Applicant: **LG Energy Solution, Ltd.
Seoul 07335 (KR)**

(72) Inventors:
• **LEE, Min Kyu
Daejeon 34122 (KR)**

• **LEE, Jae Ho
Daejeon 34122 (KR)**
• **CHOI, Ji Eun
Daejeon 34122 (KR)**
• **KIM, Sang Hun
Daejeon 34122 (KR)**
• **HWANG, Ji Young
Daejeon 34122 (KR)**
• **LEE, Ji Sun
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **SECONDARY BATTERY**

(57)     A secondary battery according to an embodiment of this specification includes an electrode assembly, an exterior film having an inner space, in which the electrode assembly is accommodated, and an exterior opening, through which the inner space communicates with the outside, a cover member configured to cover the exterior opening of the exterior film, and a gasket member disposed between the cover member and the exterior film, wherein the gasket member is provided with a plurality of cover sealing parts that are in contact with the exterior film, and the exterior film is provided with a film sealing part on any one surface of surfaces perpendicular to the exterior opening, wherein $I_{DV}$ defined as a factor is 0.5 or more. The secondary battery may induce the ventilation direction to ensure safety.

【FIG. 2】

**Description**

**TECHNICAL FIELD**

This specification relates to a secondary battery.

**BACKGROUND ART**

In general, secondary batteries refer to batteries that are chargeable and dischargeable unlike non-rechargeable primary batteries and are widely used in electronic devices such as mobile phones, notebook computers and camcorders, electric vehicles, or the like.

According to the shape of a battery case, the secondary batteries may be classified into a cylindrical type or prismatic type battery in which an electrode assembly is embedded in a cylindrical or prismatic metal can, and a pouch type battery in which an electrode assembly is embedded in a pouch type case made of a laminate sheet, and the like.

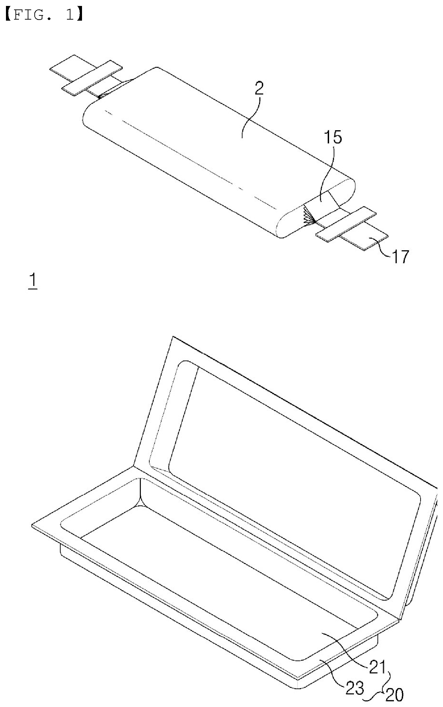

FIG. 1 is a view illustrating an example of a pouch type secondary battery. A pouch type secondary battery 1 (pouch type cell) includes an electrode assembly 2 in which an electrode and a separator are alternately stacked, and a pouch type exterior 20 in which the electrode assembly 2 is accommodated. Electrode tabs 15 may be connected to the electrodes of the electrode assembly 2, respectively. The electrode tabs 15 may be welded to each other on a predetermined area, and then be connected to an electrode lead 17 by welding. The exterior 20 includes an accommodation part 21 (cup part) for accommodating the electrode assembly 2. The accommodation part 21 of the exterior 20 may be provided as one or two portions each having a recessed shape. FIG. 1 illustrates the accommodation part 21 provided as two portions each having a recessed shape. This exterior 20 may be manufactured through molding of a pouch film. A sealing part 23 (terrace) is formed around a circumference of the accommodation part 21 by sealing.

A molding depth of the cup part molded in the pouch film is limited by material characteristics of the pouch film. Accordingly, it is difficult to mold the cup part to have a depth sufficient to increase a battery capacity, and also a material or thickness of the pouch film has to be restrictively selected. As the thickness of the pouch film is decreased during the molding of the cup part, the exterior is prone to a defect such as cracks.

Thus, a pouch-type case capable of accommodating an electrode assembly without forming a cup part is being developed. In case of this case, after four surfaces are wrapped with a pouch film, remaining two surfaces are sealed using a member such as a cap. In this case, a direction in which ventilation occurs is not constant because a surface, on which the pouch film is sealed, and a surface that is sealed with a member such as a cap variously occur. Here, when the ventilation occurs in a direction in which an electrode terminal is disposed, an electrical short may occur, and rapid heat propagation may occur to cause a risk of explosion and fire. This prediction of the direction in which the ventilation occurs becomes more difficult when specifications of the secondary battery are changed, and thus, safety of the secondary battery may be very vulnerable.

**DISCLOSURE OF THE INVENTION**

**TECHNICAL PROBLEM**

Embodiments of this specification are intended to provide a secondary battery capable of solving various problems occurring during molding of a cup part for accommodating an electrode assembly.

In addition, embodiments of this specification are intended to provide a secondary battery having improved safety by controlling a ventilation direction through control of sealing lengths and sealing widths of a cover sealing part and a film sealing part.

**TECHNICAL SOLUTION**

[1] In an example, a secondary battery includes an electrode assembly, an exterior film having an inner space, in which the electrode assembly is accommodated, and an exterior opening, through which the inner space communicates with the outside, a cover member configured to cover the exterior opening of the exterior film, and a gasket member disposed between the cover member and the exterior film, wherein the gasket member may be provided with a plurality of cover sealing parts that are in contact with the exterior film, and the exterior film may be provided with a film sealing part on any one surface of surfaces perpendicular to the exterior opening, wherein $I_{DV}$ defined as following Equation 1 may be 0.5 or more.

[Equation 1]

$$I_{DV} = (W_c \times L_f) / (P_c \times W_f)$$

In Equation 1, $W_c$ is a sealing width (mm) of the cover sealing part, $P_c$ is a total sealing length (mm) of the plurality of cover sealing parts, $W_f$ is a sealing width (mm) of the film sealing part, and $L_f$ is a sealing length (mm) of the film sealing part.

[2] In the secondary battery of [1], the $I_{DV}$ may be 0.5 to 5.0.

[3] In the secondary battery of [1] and/or [2], the exterior film may have a shape in which a predetermined sheet having a first end and a second end, which is spaced apart from the first end in a predetermined direction, is rolled or folded so that the first end and the second end are in contact with each other, wherein the film sealing part may be provided at a portion at which the first end and the second end are in contact with each other.

[4] In at least one of the secondary batteries of [1] to [3], the film sealing part may be provided on a surface corresponding to a thickness of the electrode assembly among the surfaces perpendicular to the exterior opening of the exterior film.

[5] In at least one of the secondary batteries of [1] to [4], the $W_c$ may be 3 mm to 30 mm.

[6] In at least one of the secondary batteries of [1] to [5], the $W_f$ may be 5 mm to 20 mm.

[7] In at least one of the secondary batteries of [2] to [6], an inner surface of the first end may be coupled to an inner surface or an outer surface of the second end.

[8] In at least one of the secondary batteries of [1] to [7], the cover member may include a first member configured to obstruct the exterior opening, and a second member extending from the first member and disposed to oppose an inner surface of the exterior film, wherein the gasket member may be disposed between the second member and the inner surface of the exterior film.

[9] In the secondary battery of [8], the second member may be provided along an edge of the first member and extends from the first member in a direction facing the inner space.

[10] In the secondary battery of [8] and/or [9], the second member may have a length to be in contact with the electrode assembly in the exterior film.

[11] In at least one of the secondary batteries of [8] to [10], the second member may be provided along an edge of the first member, and extend from the first member in a direction facing the outside.

[12] In at least one of the secondary batteries of [1] to [11], the cover member may have a through-hole through which an electrode lead electrically connected to the electrode assembly passes.

[13] In at least one of the secondary batteries of [1] to [12], the gasket member may include a first layer having an inner surface, which allows for coupling with an outer surface of the cover member facing an inner surface of the exterior film, and an outer surface which allows for coupling with the inner surface of the exterior film.

[14] In at least one of the secondary batteries of [1] to [13], the gasket member may include a first layer which allows for coupling with an outer surface of the cover member facing an inner surface of the exterior film, and a second layer which is stacked on an outer surface of the first layer and allows for coupling with the inner surface of the exterior film.

[15] In at least one of the secondary batteries of [1] to [14], the gasket member may include a first layer which allows for coupling with an outer surface of the cover member facing an inner surface of the exterior film, a second layer which allows for coupling with the inner surface of the exterior film, and a third layer disposed between the first layer and the second layer.

## ADVANTAGEOUS EFFECTS

In the secondary battery according to an embodiment of this specification, the exterior may be provided without the molding of the cup part for accommodating the electrode assembly. Thus, the size of the exterior may be increased to easily increase the battery capacity, the material or thickness of the sheet for manufacturing the exterior may be relatively freely selected, and the defect such as cracks may not easily occur.

In addition, in the secondary battery according to an embodiment of this specification, the sealing widths and the sealing lengths of the cover sealing part and the film sealing part may be adjusted to control the direction in which the ventilation occurs, thereby expecting the improvement of the safety even when the specifications of the secondary battery are changed.

## BRIEF DESCRIPTION OF THE DRAWINGS

FIG. 1 is a view illustrating an example of a pouch-type secondary battery.

3

FIG. 2 is a perspective view illustrating a secondary battery according to a first embodiment of this specification.

FIG. 3 is an exploded perspective view of the secondary battery in FIG. 2.

FIG. 4 is a cross-sectional view illustrating a first modified example of an exterior film of the secondary battery in FIG. 2.

FIG. 5 is a cross-sectional view illustrating a second modified example of the exterior film of the secondary battery in FIG. 2.

FIG. 6 is a cross-sectional view taken along line A-A of the secondary battery in FIG. 2.

FIG. 7 is a cross-sectional view illustrating a first modified example of a gasket member of the secondary battery in FIG. 2.

FIG. 8 is a cross-sectional view illustrating a second modified example of the gasket member of the secondary battery in FIG. 2.

FIG. 9 is a cross-sectional view illustrating a third modified example of the gasket member of the secondary battery in FIG. 2.

FIG. 10 is a perspective view illustrating a secondary battery according to a second embodiment of this specification.

FIG. 11 is an exploded perspective view of the secondary battery in FIG. 10.

FIG. 12 is a cross-sectional view of the secondary battery taken along a line B-B in FIG. 10.

## MODE FOR CARRYING OUT THE INVENTION

Advantages and features of this specification, and implementation methods thereof will be clarified through following examples described with reference to the accompanying drawings. The secondary battery disclosed in this specification may, however, be embodied in different forms and should not be construed as limited to the examples set forth herein. Rather, these examples are provided so that this disclosure will be thorough and complete, and will fully convey the scope of the present disclosure to those skilled in the art. Further, the present disclosure is only defined by scopes of claims Like reference numerals refer to like elements throughout.

Unless terms used in the present disclosure are defined differently, all terms (including technical and scientific terms) used herein have the same meaning as generally understood by those skilled in the art. Also, unless defined clearly and apparently in the description, the terms as defined in a commonly used dictionary are not ideally or excessively construed as having formal meaning.

The terminology used herein is for the purpose of describing embodiments and is not intended to limit the invention relating to the secondary battery disclosed in this specification. In this specification, the terms of a singular form may comprise plural forms unless specifically mentioned. The meaning of "comprises" and/or "comprising" does not exclude other components besides a mentioned component.

In this specification, the terms of a singular form may comprise plural forms unless specifically mentioned. The meaning of "includes (comprises)" and/or "including (comprising)" does not exclude other components besides a mentioned component.

In this specification, a base material of "A and/or B" means a base material of A or B, or a mixture of A and B.

Hereinafter, a secondary battery described in this specification will be described in detail.

In this specification, the secondary battery includes one or more of the technical features and/or technical configurations described below, and these technical features and/or technical configurations may be combined in various manners.

In one aspect, provided is a secondary battery which includes: an electrode assembly; an exterior film having an inner space, in which the electrode assembly is accommodated, and an exterior opening, through which the inner space communicates with the outside; a cover member that covers the exterior opening of the exterior film; and a gasket member disposed between the cover member and the exterior film, wherein the gasket member is provided with a plurality of cover sealing parts that are in contact with the exterior film, and the exterior film is provided with a film sealing part on any one surface of surfaces perpendicular to the exterior opening, wherein $I_{DV}$ defined as following Equation 1 is 0.5 or more.

[Equation 1]

$$I_{DV} = (W_c \times L_f) / (P_c \times W_f)$$

In Equation 1, $W_c$ is a sealing width (mm) of the cover sealing part, $P_c$ is a total sealing length (mm) of the plurality of cover sealing parts, $W_f$ is a sealing width (mm) of the film sealing part, and $L_f$ is a sealing length (mm) of the film sealing part.

As described above, the conventional pouch-type secondary battery, in which the cup part is molded, has many problems that need to be solved, and to solve these problems, the secondary battery will be provided. However, in the case of the secondary battery disclosed in this specification, it is difficult to predict a direction of ventilation, and when the specifications are changed, predictability is significantly reduced, and thus, it is difficult to ensure safety.

Thus, in order to ensure the safety of the secondary battery, the direction in which the ventilation occurs may be induced in a desired direction, and a sealing width and sealing length of a sealed portion may be adjusted to provide a secondary battery designed to have an $I_{DV}$ of 0.5 or more as being defined in Equation 1 by considering that the control in direction in which the ventilation occurs is possible.

## Ventilation direction control index of secondary battery

In one aspect, the secondary battery is characterized in that an $I_{DV}$ defined as following Equation 1 is 0.5 or more.

[Equation 1]

$$I_{DV} = (W_c \times L_f) / (P_c \times W_f)$$

In Equation 1, $W_c$ is a sealing width (mm) of the cover sealing part, $P_c$ is a total sealing length (mm) of the plurality of cover sealing parts, $W_f$ is a sealing width (mm) of the film sealing part, and $L_f$ is a sealing length (mm) of the film sealing part.

The $I_{DV}$ may be defined as a ratio of the product of the sealing width of the cover sealing part and the sealing length of the film sealing part to the product of the total sealing length (sealing circumference) of the cover sealing part and the sealing width of the film sealing part, or on the other hand, may be defined as a value obtained by dividing the ratio of the sealing width to the total sealing length of the cover sealing part by a ratio of the sealing width to the sealing length of the film sealing part. The factors may be factors capable of inducing the ventilation in an appropriate direction at an appropriate time point when an internal pressure increases due to an occurrence of an event in the secondary battery.

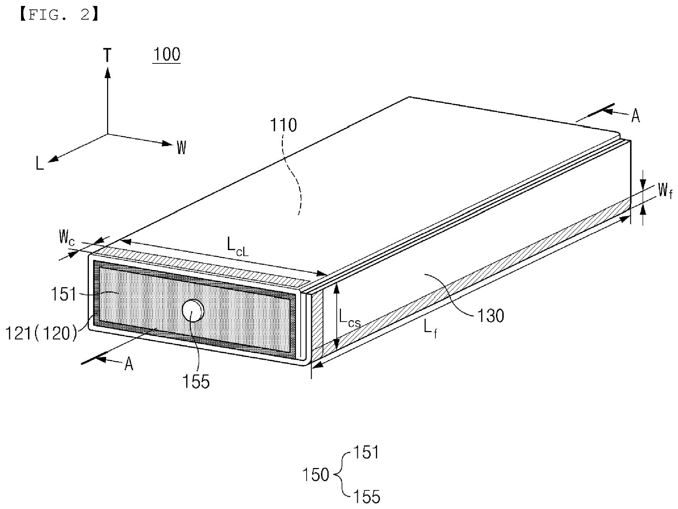

Hereinafter, referring to FIG. 2, the factors constituting the $I_{DV}$ and their correlations and also technical meanings will be described.

The $I_{DV}$ may be seen as having higher predictability of the direction in which the ventilation occurs as its value increases, and thus, it may be seen that it is important to increase in sealing length $L_f$ of the film sealing part 138 and increase in sealing width $W_c$ of the cover sealing part 158. When the sealing width $W_f$ of the film sealing part is narrow, and the sealing length $P_c$ of the cover sealing part is long, there is high possibility that the ventilation occurs in the direction of the cover member when the internal pressure increases. However, since the sealing lengths $L_f$ and $P_c$ of the film sealing part and the cover sealing part are factors related to the specifications of the secondary battery, it is desirable to adjust specifications of a stack cell of the secondary battery, i.e., a length direction L and width direction W of the electrode assembly when determining the specifications.

Here, the sealing length $P_c$ of the cover sealing part 158 corresponds to a circumference of a second member 152 of a cover member 150 to be described later and may be calculated as "$2L_{cL} + 2L_{cS}$". The $I_{DV}$ may be affected by a circumference of the cover member 150, and the circumference may be derived by the sum of short sides and long sides of the cover member 150 as described above. However, when adjusting $L_{cL}$ and $L_{cS}$ to adjust the circumference, the $L_{cL}$ refers to a width of the electrode assembly and is not easy to be adjusted, but the $L_{cS}$ refers to a thickness of the electrode assembly, i.e., the number of stack cells, and may be easily adjusted. However, when increasing in number of stack cells to increase in $L_{cS}$, advancements in welding and sealing technology between electrode tabs may be required. Thus, it is desirable to adjust the circumference in consideration of all these circumstances.

Although the $I_{DV}$ increases in predictability of the ventilation direction as its value increases, it may be desirable to control the appropriate value so that the appropriate value is satisfied in terms of an energy density of the secondary battery.

The increase of the $I_{DV}$ may mean that the sealing width $W_c$ of the cover sealing part increases, and the sealing length $L_f$ of the film sealing part increases, or that the sealing length $P_c$ of the cover sealing part decreases, and the sealing width $W_f$ of the film sealing part decreases.

Although it is desirable to increase in sealing length $L_f$ of the film sealing part in terms of improving the energy density, the length of the secondary battery may not be freely changed in some cases. In addition, when the sealing width $W_f$ of the film sealing part is narrowed, it is desirable in terms of the ventilation induction, and processibility of the sealing process, which is affected by a surface pressure, may be excellent. However, considering minimum sealing force required to withstand the internal pressure under general operating situations, if the sealing width is provided to be too narrow, the problem in which the ventilation pressure is lowered may occur.

The sealing width $W_c$ and the sealing length $P_c$ of the cover sealing part may have a significant influence. The sealing length $P_c$ of the cover sealing part may be able to be designed and changed in that the structure is changed by stacking two cells in a space occupied by one cell. The sealing width $W_c$ is also easy to be controlled. However, depending on the sealing width $W_c$, a length by which the cover member 150 extends into the inner space 131 of the exterior film may be determined, and this may mean that a space capable of accommodating the electrode assembly is reduced. The reduction in inner space due to the sealing width $W_c$ of the cover sealing part may have a significant impact on a loss of an inner space, and when considering that an essential design portion that has to be introduced into the inner space for the sealing and the cover member is sealed by being coupled to both sides. This difference may have a significant impact on the energy density, and when viewed in a unit of a module or pack, it may be a significant amount that is difficult to be ignored. Thus, it is desirable to design the secondary battery so that the $I_{DV}$ does not become too large, and preferably, it may be 5.0 or less.

The $I_{DV}$ is characterized by being 0.5 or more, and preferably may be 0.5 to 5.0. When the $I_{DV}$ is less than 0.5, there is a problem that the ventilation direction is not controlled as described above.

The secondary battery may be manufactured and designed so that the $I_{DV}$ is at least 0.5, and preferably, 0.51 or more, 0.53 or more, 0.55 or more, or 0.58 or more. In addition, it may be more preferably 4.90 or less, 4.50 or less, 4.00 or less, 3.50 or less, 3.00 or less, or 2.90 or less. When designing the secondary battery so that the $I_{DV}$ has a value in this range, even in design of not only a long cell having a small width W and a long length L, but also a cell having a short length L and a large width W, if the ventilation due to an event occurring in the exterior film occurs, the ventilation direction may be induced, and also, a ventilation pressure above a certain level may be secured to ensure safety.

In terms of satisfying the $I_{DV}$, it is preferable that a sealing width is controlled during sealing, and the $W_c$ may be 3 mm to 30 mm. Preferably, it may be 3.5 mm or more, 4 mm or more, and also 25 mm or less, 20 mm or less, 15 mm or less or 10 mm or less.

In addition, in terms of satisfying the $I_{DV}$, the $W_f$ may be 5 mm to 20 mm, preferably 6 mm or more, 7 mm or more, or 8 mm or more, and may also be 18 mm or less, 15 mm or less, or 12 mm or less.

## Structure of secondary battery

Hereinafter, preferred embodiments of this specification will be described in detail with reference to the accompanying drawings to enable those skilled in the art to which the present invention pertains to easily carry out the present invention.

## First embodiment

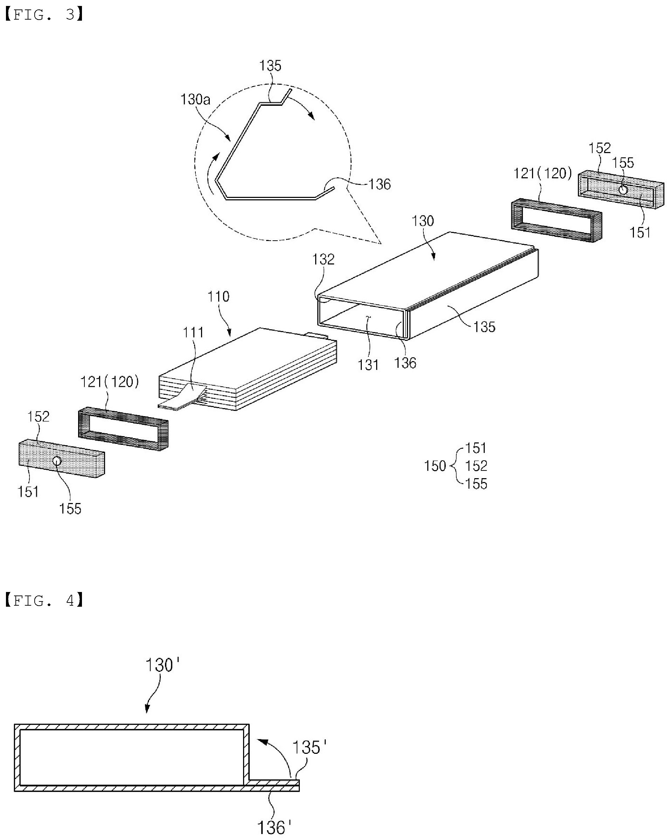

FIG. 2 is a perspective view illustrating a secondary battery 100 according to a first embodiment of this specification, and FIG. 3 is an exploded perspective view of the secondary battery 100 in FIG. 2. The secondary battery 100 according to the first embodiment of this specification may include an electrode assembly 110, an exterior film 130, a cover member 150, and a gasket member 120, as illustrated in FIGS. 2 and 3. Hereinafter, the secondary battery 100 according to this embodiment will be described in detail mainly with reference to FIG. 3. For reference, contents of the first embodiment may be equally applied to embodiments described later, as long as they do not conflict with each other, and technical configurations of each embodiment may be combined and changed if technically possible.

### Electrode assembly (110)

The electrode assembly 110 may be provided by alternately stacking an electrode and a separator. The electrodes may comprise a positive electrode and a negative electrode. The electrode assembly 110 may include an electrode tab 111 connected to the electrode. The electrode tab 111 may be provided separately or may be provided as a portion of a current collector constituting the electrode. The electrode tabs 111 may be welded to each other on a predetermined area, and then electrically connected to an electrode terminal 155 to be described later.

### Exterior film (130)

The exterior film 130 may be an exterior that accommodates the electrode assembly 110. The exterior film 130 may include an inner space 131 that accommodates the electrode assembly 110. The exterior film 130 may include an exterior opening 132 that allows the inner space 131 to communicate with the outside of the exterior film 130. The exterior opening 132 may be provided in each of both ends in a longitudinal direction of the exterior film 130. The exterior opening 132 may be sealed by the cover member 150 and the gasket member 120 to be described later.

The exterior film 130 may be obtained from a predetermined sheet 130a. The predetermined sheet 130a may be a sheet having a first end 135, and a second end 136 spaced apart from the first end 135 in a predetermined direction. When this sheet 130a is rolled or folded so that the first end 135 and the second end 136 are in contact with each other, the exterior film 130 may be obtained.

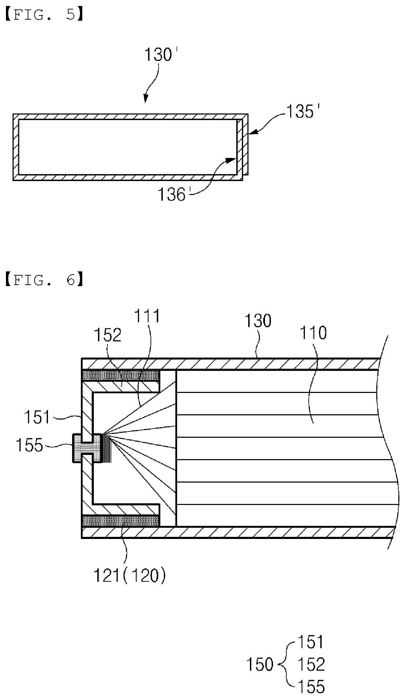

The first end 135 and the second end 136 may be coupled to each other. An adhesive, an adhesive film, or thermal fusion may be used for coupling. Here, as illustrated in FIG. 3 3, an inner surface of the first end 135 may be coupled to an inner surface of the second end 136. Alternatively, as illustrated in FIG. 5, an inner surface of a first end 135' may be coupled to an outer surface of a second end 136'. As described above, a film sealing part 138 may be provided at a portion at which the first end 135 and the second end 136 meet each other.

FIG. 4 is a cross-sectional view illustrating a first modified example of an exterior film 130 of the secondary battery 100 in FIG. 2. A coupled portion of the first end 135' and the second end 136' may be folded in an arrow direction in FIG. 5. Accordingly, a space occupied by an exterior film 130' may be reduced. As described above, when the inner surfaces of the first end 135' and the second end 136' are sealed by, for example, thermal fusion and then folded, the exterior film 130 having a shape as in FIG. 3 may be formed.

FIG. 5 is a cross-sectional view illustrating a second modified example of the exterior film 130 of the secondary battery 100 in FIG. 2. The coupling of the first end 135' and the second end 136' may be performed by the inner and outer surfaces or the outer and inner surfaces, which meet each other, and in this case, the folding for reducing a space occupied by the secondary battery after the sealing may not be necessary.

Although not limited, when the first end 135' and the second end 136' form the coupling between the inner surfaces as in FIG. 4, the sealing may be performed using the thermal fusion, and when the first end 135' and the second end 136' form the coupling between the inner surface and the outer surface as in FIG. 5, the sealing may be performed using the adhesive film or adhesive. A method for forming the coupling and sealing may be selectively applied, but the sealing using the thermal fusion may be preferable in terms of sealing performance.

The film sealing part 138 may be formed to have a length in longitudinal direction L of an electrode assembly 110 on any one of the surfaces perpendicular to an opening 132 of the outer exterior of the exterior film 130. However, preferably, the film sealing part 138 may be formed on a surface corresponding to a thickness of the electrode assembly, that is, a surface corresponding to a short side of four sides of a cover member 150 described later, and when surrounding the electrode assembly 110 using the exterior film 130, the film sealing part 138 may be tightly surrounded so that there is no empty space therein.

The sheet 130a (see FIG. 3) may be a sheet including a metal layer made of aluminum, stainless steel, or the like. The sheet 130a may be a laminate sheet further including a resin layer stacked on the metal layer. The resin layer may include a first resin layer disposed on an inner surface of the metal layer. The first resin layer may be a layer made of polypropylene (PP) or polyphthalamide (PPA). The first resin layer may require high insulating properties and corrosion resistance, and thus the first resin layer may be made of other resins that satisfy these requirements. The resin layer may include a second resin layer disposed on an outer surface of the metal layer. The second resin layer may be a layer made of polyethylene terephthalate (PET). The second resin layer may be required to protect the secondary battery 100 and secure insulation of the secondary battery 100, and the second resin layer may be made of other resins that satisfy these requirements.

Cover member (150)

As illustrated in FIGS. 2 and 3, the cover member 150 may be a member that covers the exterior opening 132 of the exterior film 130. In order to prevent leakage of an electrolyte filled in the inner space 131 of the exterior film 130, the cover member 150 may seal the exterior opening 132 of the exterior film 130 together with the gasket member 120 to be described later.

As illustrated in FIGS. 3 and 6, the cover member 150 may include a first member 151 that obstructs the exterior opening 132. FIG. 6 is a cross-sectional view taken along line A-A of the secondary battery in FIG. 2. The first member 151 may be provided to correspond to a shape of the exterior opening 132 in order to obstruct the exterior opening 132. FIG. 3 illustrates the first member 151 having a rectangular shape (shape of the exterior opening).

In order to seal the inner space 131 of the exterior film 130, the first member 151 may be obtained from a material that does not easily allow moisture to pass therethrough. For example, the first member 151 may be obtained from a metal or resin, or obtained from a laminate sheet including a metal layer. The same may apply to a second members 152 to be described later.

As illustrated in FIG. 5, the cover member 150 may include the second member 152 extending from the first member 151. The second member 152 may be provided as one body with the first member 151, or may be provided as a separate body and then coupled to the first member 151. The second member 152 may be disposed to oppose an inner surface of the exterior film 130.

According to the related art, a cup part is molded in a pouch film, and the cup part is sealed using another pouch film to provide an exterior film. However, as a molding depth of the cup part is limited by material characteristics of the pouch film, it is difficult to mold the cup part to have a depth sufficient to increase a battery capacity, and also a material or thickness of the pouch film has to be restrictively selected. In addition, as the thickness of the pouch film is decreased during the molding of the cup part, the pouch type exterior is prone to a defect such as cracks.

However, in the secondary battery 100 according to this embodiment, the exterior film 130 may be provided without molding a cup part, and then the electrode assembly 110 may be inserted into the exterior film 130 through the exterior opening 132 so that the constraints or defects as above do not occur. Thus, a size of the exterior film 130 may be increased to easily increase the battery capacity, a material or thickness of the sheet 130a may be relatively freely selected, and a defect such as cracks may not easily occur. For example, in a case in which the sheet 130a is rolled or folded to provide the exterior film 130, the sheet 130a may be rolled or folded in a state in which the electrode assembly 110 is disposed on a top surface of the sheet 130a in a spread state. Even in this case, the exterior film 130 may be provided without molding a cup part.

Moreover, the secondary battery 100 according to this embodiment is superior not only to the pouch type battery but also to a prismatic type battery according to the related art. In the prismatic type battery, when volume expansion of the electrode assembly occurs during charging or discharging, the electrode assembly may be damaged due to a prismatic type metal can that is hardly changed in shape. However, in the secondary battery according to this embodiment, when volume expansion of the electrode assembly occurs during charging or discharging, the exterior film may be correspondingly changed in shape, that is, the exterior film may be stretched, and thus the electrode assembly may not be damaged.

Gasket member (120)

As illustrated in FIGS. 2 and 3, the gasket member 120 may be a member disposed between the cover member 150 and the exterior film 130. As illustrated in FIG. 6, the gasket member 120 may be disposed between the second member 152 of the cover member 150 and the inner surface of the exterior film 130.

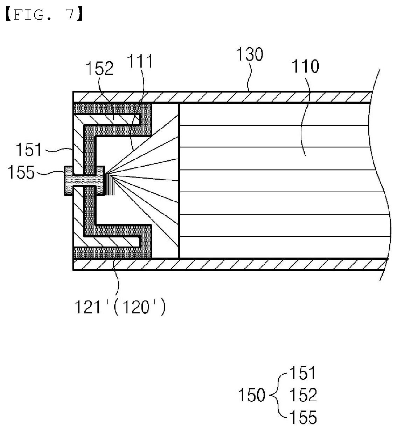

As illustrated in FIG. 3, the gasket member 120 may be provided to surround the cover member 150 as a whole. For example, the gasket member 120 may have a frame shape so as to surround the second member 152 of the cover member 150. Alternatively, as illustrated in FIG. 7, a gasket member 120' may be provided to surround not only the second member 152 but also an inner side of each of the first member 151 and the second member 152, i.e., an inner side of the cover member 150 as a whole. FIG. 7 is a cross-sectional view illustrating a first modified example of the gasket member 120 of the secondary battery in FIG. 2.

The gasket member 120 may prevent an inner electrolyte from leaking through a gap between the cover member 150 and the exterior film 130.

Referring to FIG. 2, the cover sealing part 158 may be formed by coupling a gasket member 120 that surrounds the second member 152 of the cover member 150 to the exterior film 130 that is in contact with the gasket member 120.

The gasket member 120 may be disposed between the cover member 150 and the exterior film 130 to improve a coupling force between the cover member 150 and the exterior film 130. For example, as illustrated in FIG. 6, the gasket member 120 may include a first layer 121 having an inner surface which allows for coupling with an outer surface of the cover member 150 facing the inner surface of the exterior film 130, and an outer surface which allows for coupling with the inner surface of the exterior film 130. FIG. 6 illustrates the first layer 121 stacked on the outer surface of the second member 152 of the cover member 150. For reference, on the basis of a vertical direction in FIG. 6, the outer surface may be defined in a direction from the inside toward the outside of the exterior film 130, and the inner surface may be defined in a direction from the outside toward the inside of the exterior film 130.

The gasket member 120 may include the first layer 121 as described above, and a material that facilitates the coupling between the cover member 150 and the exterior film 130 may be applied as a material applied to the first layer 121. For example, the material may include a first resin selected from among a resin having a melting point ($T_m$) of about 135°C to about 150°C, a resin having a melt flow rate (MFR) of about 4 g/10 min to about 10 g/10 min at 230°C, and a resin having a melting point ($T_m$) of about 135°C to about 150°C and a melt flow rate (MFR) of about 4 g/10 min to about 10 g/10 min at 230°C. In a case in which the first resin having the foregoing physical properties is applied to the first layer, thermal resistance is excellent so that, even when thermal fusion is performed at a high temperature, the gasket member may endure without a change in outer appearance to sufficiently secure sealing strength, and may have excellent endurance against an increase in internal pressure due to a gas generated inside the case.

For example, the first resin may be a modified polyolefin-based resin, and the first layer may include the first resin in an amount of more than 50 wt%, preferably 70 wt% or more, 80 wt% or more, or 90 wt% or more. The first resin may be applied alone, and in a case in which the first resin is mixed, the residue may include an appropriate resin such as other polyolefin-based resins. The modified polyolefin-based resin may be one modified with an acid or siloxane, preferably one modified with an acid, more preferably a polyolefin having undergone a post-treatment or copolymerization with a monomer including an acrylic acid, for example, an acid-modified polypropylene or an acid-modified polyethylene, where a plasma-treated polypropylene or polyethylene may be applied, and more preferably include the acid-modified polypropylene. In the case in which this modified polyolefin is applied, a functional group introduced by modification improves a coupling force with a surface of a metal, and thus it may be more advantageous for adhesion between the metal and the resin. Considering that a metal may be applied as a material of the cover member 150, a resin such as the foregoing resins may be applied to the gasket member 120.

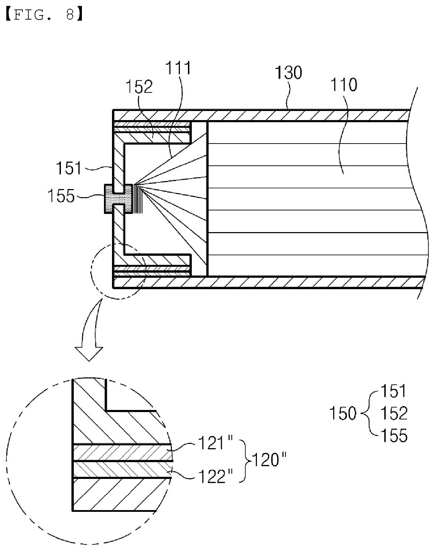

As illustrated in FIG. 8, a gasket member 120'' may include a first layer 121'' which allows for coupling with the outer surface of the cover member 150 facing the inner surface of the exterior film 130, and a second layer 122'' which is stacked on an outer surface of the first layer 121'' and allows for coupling with the inner surface of the exterior film 130. FIG. 8 is a cross-sectional view illustrating a second modified example of the gasket member 120 of the secondary battery in FIG. 2. FIG. 8 illustrates the first layer 121'' stacked on the outer surface of the second member 152 of the cover member 150.

The gasket member 120'' may include the first layer 121'' and the second layer 122'' as described above. In this case, a material applicable to the first layer 121'' may be a material capable of improving the coupling force with the cover member 150, and a material applicable to the second layer 122'' may be a material capable of improving the coupling force with the exterior film 130.

For example, the first layer may include a first resin selected from the group consisting of a resin having a melting point ($T_m$) of about 135°C to about 150°C, a resin having a melt flow rate (MFR) of about 4 g/10 min to about 10 g/10 min at 230°C, and a resin having a melting point ($T_m$) of about 135°C to about 150°C and a melt flow rate (MFR) of about 4 g/10 min to about 10 g/10 min at 230°C. And the second layer may include a second resin selected from the group consisting of a resin having a melting point ($T_m$) of about 120°C to about 145°C, a resin having a melt flow rate (MFR) of about 5 g/10 min to about 18 g/10 min at 230°C, and a resin having a melting point ($T_m$) of about 120°C to about 145°C and a melt flow rate (MFR) of about 5 g/10 min to about 18 g/10 min at 230°C.

When compared to the case in which the gasket member is provided as a single layer, in a case in which the gasket member 120'' is provided as a dual layer, the coupling force with the cover member 150 and the coupling force with the exterior film 130 may be more improved, and the sealing strength may be even more improved. In particular, in a case in which a resin having a lower melting point or a higher melt flow rate than the first resin applied to the first layer is included as the second resin in the second layer, the physical properties may be more similar to those of the exterior film 130, and this may lead to expectations of not only improvement in sealing processability but also improvement in coupling force due to thermal fusion. Thus, the sealing strength may be increased, and accordingly, the endurance against the increase in internal pressure may be significantly improved.

The first resin included in the first layer may be the same as set forth above, and the second resin included in the second layer may be, for example, a polyolefin-based resin. In this case, the second resin may differ from the first resin in terms of whether a modifying group is introduced or not. The second resin may be an unmodified polyolefin-based resin, may include, for example, a polypropylene or polyethylene, may be a homopolymer thereof, or may be a random copolymer or block copolymer copolymerized with a small quantity of comonomers. An amount of the second resin when the second resin is included in the second layer may be the same as the amount of the first resin when the first resin is included in the first layer.

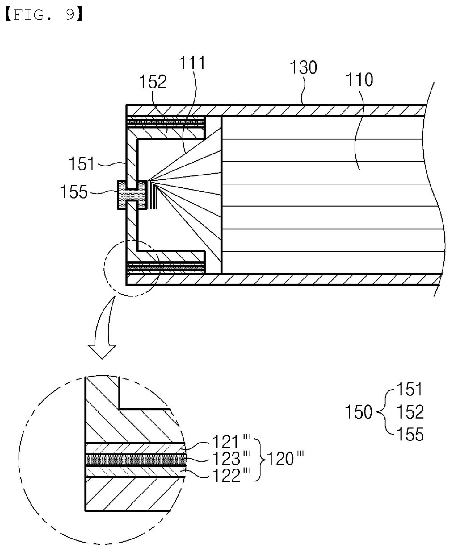

As illustrated in FIG. 9, a gasket member 120''' may include a first layer 121''' which allows for coupling with the outer surface of the cover member 150 facing the inner surface of the exterior film 130, a second layer 122''' which allows for coupling with the inner surface of the exterior film 130, and a third layer 123''' disposed between the first layer 121''' and the second layer 122'''. FIG. 9 is a cross-sectional view illustrating a third modified example of the gasket member of the secondary battery in FIG. 2.

The gasket member 120''' may include the first layer 121''' and the second layer 122''' as described above, and may further include the third layer 123''' therebetween. As the third layer 123''' is disposed between the first layer 121''' and the second layer 122''', the third layer 123''' may function to maintain the shape, and may maintain a sealing thickness between the cover member 150 and the exterior film 130 during the sealing or battery operation, thereby contributing improvement in sealability.

For example, the first layer included in the gasket member may include a first resin selected from the group consisting of a resin having a melting point ($T_m$) of about 135°C to about 150°C, a resin having a melt flow rate (MFR) of about 4 g/10 min to about 10 g/10 min at 230°C, and a resin having a melting point ($T_m$) of about 135°C to about 150°C and a melt flow rate (MFR) of about 4 g/10 min to about 10 g/10 min at 230°C. The second layer may include a second resin selected from the group consisting of a resin having a melting point ($T_m$) of about 120°C to about 145°C, a resin having a melt flow rate (MFR) of about 5 g/10 min to about 18 g/10 min at 230°C, and a resin having a melting point ($T_m$) of about 120°C to about 145°C and a melt flow rate (MFR) of about 5 g/10 min to about 18 g/10 min at 230°C. And the third layer may include a third resin selected from the group consisting of a resin having a melting point ($T_m$) of about 145°C to about 170°C, a resin having a melt flow rate (MFR) of about 2 g/10 min to about 4 g/10 min at 230°C, and a resin having a melting point ($T_m$) of about 145°C to about 170°C and a melt flow rate (MFR) of about 2 g/10 min to about 4 g/10 min at 230°C.

The third resin applicable to the third layer 123‴ may be selected from, for example, resins satisfying the foregoing melting point and melt flow rate ranges within a range of resins of the same types as the second resin.

Specific structure of cover member (150)

As illustrated in FIG. 6, the cover member 150 may include an electrode terminal 155. The electrode terminal 155 may be an electrically conductive member provided in the first member 151. The electrode terminal 155 may be a member that is exposed to the inner space 131 of the exterior film 130 so as to be electrically connected to the electrode tab 111 of the electrode assembly 110, and also is exposed to the outside of the first member 151. FIG. 6 illustrates the electrode terminal having a "I"-shaped cross-section. For example, when the electrode tabs 111 of the electrode assembly 110 are welded to an inner surface of the electrode terminal 155, and another device (not shown) is electrically connected to an outer surface of the electrode terminal 155, the other device and the electrode assembly 110 may be electrically connected to each other.

The first member 151 may include an electrolyte injection hole (not shown) for injecting an electrolyte into the inner space 131 of the exterior film 130. An electrolyte injection process and a degassing process after activation may be performed through this electrolyte injection hole. For example, in a state in which the secondary battery 100 is disposed so that the first member 151 provided with the electrolyte injection hole faces an upper side, the electrolyte may be injected into the inner space 131 of the exterior film 130 through the electrolyte injection hole. In the degassing process, an inner gas may be guided to be discharged through the electrolyte injection hole that is opened. The electrolyte injection hole may be closed by sealing or welding after the electrolyte injection and the degassing. Alternatively, a valve capable of being opened and closed may be installed on the electrolyte injection hole so as to open the electrolyte injection hole only when necessary.

According to the related art, the pouch type exterior includes an accommodation part that accommodates an electrode assembly, and a pocket part that collects a gas generated upon activation, and the pocket part is removed after the gas in the pocket part is discharged through the degassing process. This leads to a limitation that a portion of the pouch type exterior is always discarded. However, in the secondary battery 100 according to this embodiment, the electrolyte injection and the degassing may be performed through the electrolyte injection hole, and thus the discarding of the exterior as above may not occur.

As illustrated in FIG. 6, the second member 152 of the cover member 150 may be provided along an edge of the first member 151. In order to be tightly coupled to the exterior film 130, the second member 152 may be provided on the entirety of the edge of the first member 151, but alternatively the second member 152 may be provided on a portion of the edge. FIG. 3 illustrates the second member 152 provided on the entirety of the edge of the first member 151.

The second member 152 may extend from the first member 151 in a direction facing the inner space 131 (right direction in FIG. 5). The second member 152 may be set to have a length to be in contact with the electrode assembly 110. Accordingly, the electrode assembly 110 may be prevented from moving inside the exterior film 130.

**Second embodiment**

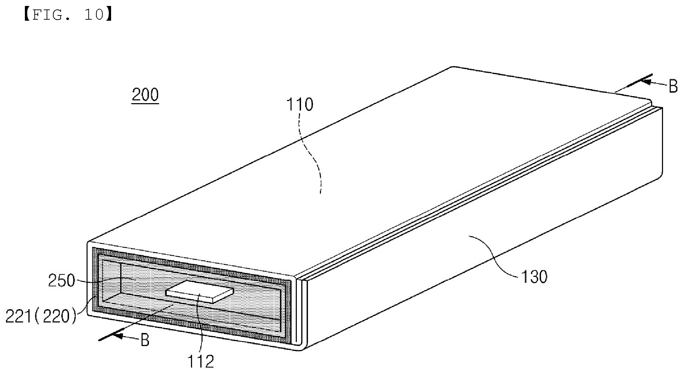

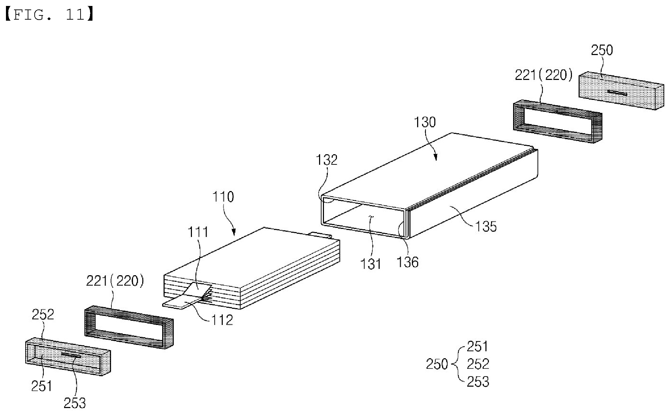

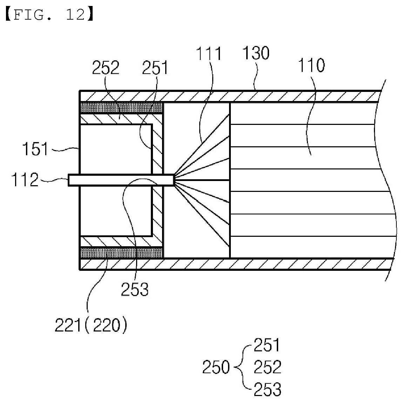

FIG. 10 is a perspective view illustrating a secondary battery 200 according to a second embodiment of this specification, FIG. 11 is an exploded perspective view of the secondary battery 200 in FIG. 10, and FIG. 12 is a cross-sectional view of the secondary battery 200 taken along a line B-B in FIG. 10. The secondary battery 200 according to this embodiment is different from the secondary battery 100 according to the first embodiment in terms of a cover member and thus will be described mainly in terms of the difference. For reference, contents according to the second embodiment may be equally applied to the foregoing embodiment described later, as long as there is no conflict with each other.

As illustrated in FIG. 10, a cover member 250 according to this embodiment may include a first member 251 and a second member 252. The first member 251 may be a member that is disposed between an inner space 131 and an exterior opening 132 of an exterior film 130 to prevent the inner space 131 and the exterior opening 132 from communicating with each other. The second member 252 may be provided along an edge of the first member 251, and extend from the first member 251 in a direction facing the outside of the exterior film 130 (left direction in FIG. 11).

The first member 251 may include a through-hole 253 through which an electrode lead 112 electrically connected to an electrode assembly 110 passes. Accordingly, the electrode lead 112 may be easily exposed to the outside during the coupling between the exterior film 130 and the cover member 250. For example, while the cover member 250 is coupled to the exterior opening 132 of the exterior film 130 in a state in which the electrode assembly 110 is accommodated in the inner space 131 of the exterior film 130, the electrode lead 112 may be fitted into the through-hole 253 of the first member 251 so that the electrode lead 112 is easily exposed to the outside. For reference, in order to prevent an electrolyte from leaking through the through-hole 253, a sealant layer (not shown) may be provided between an outer surface of the electrode lead 112 and an inner surface of the through-hole 253.

The exterior film 130 may need to be pressed toward the second member 252 in order to couple an inner surface of the exterior film 130 to an outer surface of the second member 252 by using a gasket member 220 as a medium. During this pressing, the second member 252 may need to be supported. In the secondary battery 200 according to this embodiment, the inner surface of the second member 252 may be exposed to the outside of the cover member 250, and thus a member for supporting the second member 252 may be easily disposed on the inner surface of the second member 252.

The same contents about the gasket member 120 according to the foregoing embodiment described above may be applied to the gasket member 220 according to this embodiment.

**Embodiment and Comparative Example**

Hereinafter, the present disclosure will be described in detail with reference to a specific embodiment. However, the following embodiments are merely illustrative, and the present disclosure is not limited to the prevent invention. It is obvious to those skilled in the art that various changes and modifications are possible within the scope and spirit of the present disclosure, and it is natural that these changes and modifications fall within the scope of the appended claims.

**Embodiment 1**

A polyethylene terephthalate (PET) film having a width of 266 mm, a height of 50 m, and a thickness of 12 $\mu$m and a nylon film having a width of 266 mm, a height of 50 m, and a thickness of 25 $\mu$m were stacked on one side of an aluminum alloy film having a width of 266 mm, a height of 50 m, and a thickness of 60 $\mu$m, and a polypropylene film having a width of 266 mm, a height of 50 m, and a thickness of 80 $\mu$m was stacked on the other side of the aluminum alloy film to prepare an exterior film having a structure of polyethylene terephthalate/nylon/aluminum alloy film/polypropylene film. Here, the polyethylene terephthalate film and the nylon film are a base material layer, the aluminum alloy thin film is a gas barrier layer, and the polypropylene film is a sealant layer.

Next, a cover member and a gasket member, which have the same shapes as in FIG. 7 were prepared to meet the short-side and long-side specifications of the cover sealing part described in Table 1 below, but a cover member having an insertion thickness of 1 mm into an inner side of the exterior film was used. In addition, the cover member and the gasket member were prepared by insert injection using a metal plate made of aluminum and a polypropylene resin.

An electrode assembly was prepared by simulating the assembling of a negative electrode, a positive electrode, and a porous polyethylene separator in a stacking manner, and after wrapping the electrode assembly with the exterior film, a secondary battery having a shape as illustrated in FIG. 2 was manufactured by using an assembly of a cover member and a gasket member. Here, the sealing of the film sealing part and the cover sealing part was performed for 5 seconds under conditions of 240°C and 0.6 MPa, and a sealing length and width were applied as described in Table 1 below.

**Embodiments 2 to 14, and Comparative examples 1 to 5**

A secondary battery was manufactured in the same manner as in Embodiment 1, except for the secondary battery specifications and sealing specifications listed in Table 1.

[Table 1]

| | | Cover sealing part (mm) | | | | Film sealing part (mm) | |
|---|---|---|---|---|---|---|---|
| | | Short side $L_{cS}$ | Long side $L_{cL}$ | Sealing circumference $P_c$ | Sealing width $W_c$ | Sealing length $L_f$ | Sealing width $W_f$ |
| | Embodiment 1 | 30 | 100 | 260 | 8 | 200 | 8 |
| | Embodiment 2 | 30 | 100 | 260 | 10 | 200 | 8 |
| | Embodiment 3 | 30 | 100 | 260 | 8 | 200 | 12 |
| | Embodiment 4 | 30 | 100 | 260 | 10 | 200 | 12 |
| | Embodiment 5 | 15 | 50 | 130 | 5 | 200 | 12 |
| | Embodiment 6 | 30 | 50 | 160 | 8 | 200 | 8 |
| | Embodiment 7 | 30 | 100 | 260 | 5 | 500 | 8 |
| | Embodiment 8 | 30 | 100 | 260 | 8 | 500 | 8 |

(continued)

| | Cover sealing part (mm) | | | | Film sealing part (mm) | |
|---|---|---|---|---|---|---|
| | Short side $L_{cS}$ | Long side $L_{cL}$ | Sealing circumference $P_c$ | Sealing width $W_c$ | Sealing length $L_f$ | Sealing width $W_f$ |
| Embodiment 9 | 30 | 100 | 260 | 10 | 500 | 8 |
| Embodiment 10 | 30 | 100 | 260 | 5 | 500 | 12 |
| Embodiment 11 | 30 | 100 | 260 | 8 | 500 | 12 |
| Embodiment 12 | 30 | 100 | 260 | 10 | 500 | 12 |
| Embodiment 13 | 15 | 50 | 130 | 14 | 200 | 4 |
| Embodiment 14 | 30 | 50 | 130 | 16 | 500 | 8 |
| Comparative Example 1 | 30 | 100 | 260 | 5 | 200 | 8 |
| Comparative Example 2 | 30 | 100 | 260 | 3 | 200 | 12 |
| Comparative Example 3 | 30 | 100 | 260 | 5 | 200 | 12 |
| Comparative Example 4 | 30 | 100 | 260 | 3 | 200 | 6 |
| Comparative Example 5 | 30 | 100 | 260 | 3 | 500 | 12 |

**Experimental Example 1: Whether to control ventilation direction and evaluation of ventilation pressure**

For the secondary battery manufactured above, a carbon dioxide ($CO_2$) gas was injected into a case at a rate of 50 sccm at 60°C, and a pressure at a time point at which ventilation occurs (here, a pressure is a measured value that does not take into account an atmospheric pressure of 1 atm) was measured. If the ventilation occurs in a direction of the film sealing part, it was evaluated as O, and if the ventilation occurs in a direction of the cover sealing part, it was evaluated as X.

[Table 2]

| | $I_{DV}$ | Whether to control ventilation direction | Ventilation pressure (atm) |
|---|---|---|---|
| Embodiment 1 | 0.77 | O | 3.8 |
| Embodiment 2 | 0.96 | O | 3.8 |
| Embodiment 3 | 0.51 | O | 4.0 |
| Embodiment 4 | 0.64 | O | 4.0 |
| Embodiment 5 | 0.64 | O | 4.0 |
| Embodiment 6 | 1.25 | O | 3.8 |
| Embodiment 7 | 1.20 | O | 3.8 |
| Embodiment 8 | 1.92 | O | 3.8 |
| Embodiment 9 | 2.40 | O | 3.8 |
| Embodiment 10 | 0.80 | O | 4.0 |
| Embodiment 11 | 1.28 | O | 4.0 |
| Embodiment 12 | 1.60 | O | 4.0 |
| Embodiment 13 | 5.38 | O | 3.6 |
| Embodiment 14 | 7.69 | O | 3.8 |
| Comparative Example 1 | 0.48 | X | 3.5 |
| Comparative Example 2 | 0.19 | X | 3.0 |
| Comparative Example 3 | 0.32 | X | 3.5 |
| Comparative Example 4 | 0.38 | X | 3.0 |

(continued)

|  | $I_{DV}$ | Whether to control ventilation direction | Ventilation pressure (atm) |
|---|---|---|---|
| Comparative Example 5 | 0.48 | X | 3.0 |

Referring to Table 2 above, in the case of Embodiments 1 to 14, the ventilation direction was controlled toward the film sealing part in that an $I_{DV}$ value was designed to be controlled to 0.5 or more, but in the case of Comparative Examples 1 to 5, the ventilation occurred toward the cover sealing part, and it may be confirmed that the ventilation direction was also not controlled due to failure to control the $I_{DV}$ value. It may be confirmed that the pressure at which the ventilation occurs is also relatively low in Comparative Examples, and that the ventilation pressure may also be controlled by adjusting the $I_{DV}$. In the case of Embodiments 13 and 14, when the sealing width of the film sealing part is minimized to maximize sealing processability, a minimum sealing width of the cover sealing part for the control of the ventilation direction was applied. In this case, it may be expected that a volume of a cell that is occupied by the cell in the same space will actually decrease due to an increase in sealing width, and it may be confirmed that the ventilation pressure is also relatively low compared to other embodiments. Thus, it may be confirmed that it is desirable in terms of energy density to control the $I_{DV}$ value to 5.0 or less if possible.

[Description of the Symbols]

100, 200: Secondary battery
110: Electrode assembly
111: Electrode tab
112: Electrode lead
120: Gasket member
121: First layer
122: Second layer
123: Third layer
130: Exterior film
130a: Sheet
131: Inner space
132: Exterior opening
135: First end
136: Second end
138: Film sealing part
150, 250: Cover member
151, 251: First member
152. 252: Second member
155: Electrode terminal
158: Cover sealing part

## Claims

1.    A secondary battery comprising:

an electrode assembly;
an exterior film having an inner space, in which the electrode assembly is accommodated, and an exterior opening, through which the inner space communicates with the outside;
a cover member configured to cover the exterior opening of the exterior film; and
a gasket member disposed between the cover member and the exterior film,
wherein the gasket member is provided with a plurality of cover sealing parts that are in contact with the exterior film, and
the exterior film is provided with a film sealing part on any one surface of surfaces perpendicular to the exterior opening,
wherein $I_{DV}$ defined as following Equation 1 is 0.5 or more.

[Equation 1]

$$I_{DV} = (W_c \times L_f) / (P_c \times W_f)$$

In Equation 1, $W_c$ is a sealing width (mm) of the cover sealing part, $P_c$ is a total sealing length (mm) of the plurality of cover sealing parts, $W_f$ is a sealing width (mm) of the film sealing part, and $L_f$ is a sealing length (mm) of the film sealing part.

2. The secondary battery of claim 1, wherein the $I_{DV}$ is 0.5 to 5.0.

3. The secondary battery of claim 1, wherein the exterior film has a shape in which a predetermined sheet having a first end and a second end, which is spaced apart from the first end in a predetermined direction, is rolled or folded so that the first end and the second end are in contact with each other,
wherein the film sealing part is provided at a portion at which the first end and the second end are in contact with each other.

4. The secondary battery of claim 1, wherein the film sealing part is provided on a surface corresponding to a thickness of the electrode assembly among the surfaces perpendicular to the exterior opening of the exterior film.

5. The secondary battery of claim 1, wherein the $W_c$ is 3 mm to 30 mm.

6. The secondary battery of claim 1, wherein the $W_f$ is 5 mm to 20 mm.

7. The secondary battery of claim 3, wherein an inner surface of the first end is coupled to an inner surface or an outer surface of the second end.

8. The secondary battery of claim 1, wherein the cover member comprises:

   a first member configured to obstruct the exterior opening; and
   a second member extending from the first member and disposed to oppose an inner surface of the exterior film,
   wherein the gasket member is disposed between the second member and the inner surface of the exterior film.

9. The secondary battery of claim 8, wherein the second member is provided along an edge of the first member and extends from the first member in a direction facing the inner space.

10. The secondary battery of claim 8, wherein the second member has a length to be in contact with the electrode assembly in the exterior film.

11. The secondary battery of claim 8, wherein the second member is provided along an edge of the first member, and extends from the first member in a direction facing the outside.

12. The secondary battery of claim 1, wherein the cover member has a through-hole through which an electrode lead electrically connected to the electrode assembly passes.

13. The secondary battery of claim 1, wherein the gasket member comprises a first layer having an inner surface, which allows for coupling with an outer surface of the cover member facing an inner surface of the exterior film, and an outer surface which allows for coupling with the inner surface of the exterior film.

14. The secondary battery of claim 1, wherein the gasket member comprises:

   a first layer which allows for coupling with an outer surface of the cover member facing an inner surface of the exterior film; and
   a second layer which is stacked on an outer surface of the first layer and allows for coupling with the inner surface of the exterior film.

15. The secondary battery of claim 1, wherein the gasket member comprises:

   a first layer which allows for coupling with an outer surface of the cover member facing an inner surface of the exterior film;
a second layer which allows for coupling with the inner surface of the exterior film; and
a third layer disposed between the first layer and the second layer.

【FIG. 1】

【FIG. 2】

【FIG. 3】

【FIG. 4】

【FIG. 5】

130'

135'

136'

【FIG. 6】

152 111 130 110

151

155

121(120)

151
150 { 152
155

【FIG. 7】

【FIG. 8】

【FIG. 9】

【FIG. 10】

【FIG. 11】

【FIG. 12】

**INTERNATIONAL SEARCH REPORT**

| International application No. |
|---|
| **PCT/KR2025/013490** |

| A. | CLASSIFICATION OF SUBJECT MATTER |
|---|---|

**H01M 50/184**(2021.01)i; **H01M 50/186**(2021.01)i; **H01M 50/147**(2021.01)i; **H01M 50/30**(2021.01)i

According to International Patent Classification (IPC) or to both national classification and IPC

| B. | FIELDS SEARCHED |
|---|---|

Minimum documentation searched (classification system followed by classification symbols)

H01M 50/184(2021.01); H01M 10/04(2006.01); H01M 2/02(2006.01); H01M 50/10(2021.01); H01M 50/103(2021.01); H01M 50/105(2021.01); H01M 50/178(2021.01); H01M 50/183(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 이차 전지(secondary battery), 전극 조립체(electrode assembly), 외장 필름(outer film), 커버(cover), 실링(sealing)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2023-0089378 A (SK ON CO., LTD.) 20 June 2023 (2023-06-20)<br>paragraphs [0033]-[0055] and figures 1-6 | 1-15 |
| Y | KR 10-2022-0062995 A (LG ENERGY SOLUTION, LTD.) 17 May 2022 (2022-05-17)<br>paragraphs [0042]-[0054] and figures 3-4 | 1-15 |
| Y | KR 10-2015-0105200 A (SHOWA DENKO PACKAGING CO., LTD.) 16 September 2015 (2015-09-16)<br>paragraphs [0053]-[0056] and figures 1, 3 | 13-15 |
| A | KR 10-2018-0018051 A (LG CHEM, LTD.) 21 February 2018 (2018-02-21)<br>claims 1-17 | 1-15 |
| A | KR 10-2023-0151375 A (LG ENERGY SOLUTION, LTD.) 01 November 2023 (2023-11-01)<br>claims 1-16 and figure 1 | 1-15 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 December 2025** | **02 December 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2025/013490**

| Patent document cited in search report | | | Publication date (day/month/year) | Patent family member(s) | | | Publication date (day/month/year) |
|---|---|---|---|---|---|---|---|
| KR | 10-2023-0089378 | A | 20 June 2023 | CN | 116264315 | A | 16 June 2023 |
| | | | | US | 2023-0187792 | A1 | 15 June 2023 |
| KR | 10-2022-0062995 | A | 17 May 2022 | CN | 115461914 | A | 09 December 2022 |
| | | | | EP | 4120446 | A1 | 18 January 2023 |
| | | | | EP | 4120446 | A4 | 06 March 2024 |
| | | | | EP | 4120446 | B1 | 09 July 2025 |
| | | | | JP | 2023-521808 | A | 25 May 2023 |
| | | | | JP | 7666788 | B2 | 22 April 2025 |
| | | | | KR | 10-2779619 | B1 | 10 March 2025 |
| | | | | US | 2023-0268590 | A1 | 24 August 2023 |
| | | | | WO | 2022-097918 | A1 | 12 May 2022 |
| KR | 10-2015-0105200 | A | 16 September 2015 | CN | 104893599 | A | 09 September 2015 |
| | | | | CN | 104893599 | B | 07 May 2019 |
| | | | | JP | 2015-170428 | A | 28 September 2015 |
| | | | | JP | 6381234 | B2 | 29 August 2018 |
| | | | | KR | 10-2285624 | B1 | 03 August 2021 |
| | | | | TW | 201534474 | A | 16 September 2015 |
| | | | | TW | I634006 | B | 01 September 2018 |
| KR | 10-2018-0018051 | A | 21 February 2018 | KR | 10-2158144 | B1 | 21 September 2020 |
| KR | 10-2023-0151375 | A | 01 November 2023 | None | | | |

Form PCT/ISA/210 (patent family annex) (July 2022)

27